# EUROPÄISCHE PATENTSCHRIFT

(11) **EP 0 601 305 B1**
(45) Veröffentlichungstag und Bekanntmachung des Hinweises auf die Patenterteilung: **25.09.1996**
(21) Anmeldenummer: 93116528.6
(22) Anmeldetag: 13.10.1993
(51) Int. Cl.: F02K 9/68

(54) **Triebwerk auf der Basis von katalytischer und/oder thermischer Zersetzung**
Rocket based on catalytic and for thermal decomposition
Motor-fusée sur base de décomposition thermique et/ou catalytique

(30) Priorität: 05.12.1992 DE 4240962
(43) Veröffentlichungstag der Anmeldung: 15.06.1994
(73) Patentinhaber: Daimler-Benz Aerospace Aktiengesellschaft, 80995 München (DE)
(72) Erfinder: Ehrig, Dietrich, D-28 879 Grasberg (DE)
(74) Vertreter: Hansmann, Dierk, Dipl.-Ing.

(56) Entgegenhaltungen:
- DE-A- 2 202 291
- FR-A- 2 556 046
- GB-A- 1 470 664
- GB-A- 2 095 336
- US-A- 3 871 828
- ASTRONAUTICS & AERONAUTICS, Band 14, Nr. 3, Seiten 47-57; "Liquid rockets in perspective. Developments in the 1960's"

## Beschreibung

Die Erfindung betrifft ein Triebwerk auf der Basis der katalytischen und/oder thermischen Zersetzung eines flüssigen Energieträgers, insbesondere Hydrazin, bei dem der flüssige Energieträger aus einem Vorratsbehälter über wenigstens ein Einspritzrohr in eine mit einem Katalysatorbett gefüllte Zersetzungskammer gefördert wird, das Katalysatorbett zum Einspritzrohr hin durch wenigstens eine Lage eines Drahtgewebes abgeschirmt ist und bei dem Mittel zur Verminderung der Wärmeübertragung zwischen der Zersetzungskammer und dem Einspritzrohr vorgesehen sind.

Triebwerke dieser Art, bei denen Hydrazin als flüssiger Energieträger verwendet wird sind unter anderem durch die US-3,871,828 bekanntgeworden. Hydrazintriebwerke werden für verschiedene Anwendungsfälle im Bereich der Raumfahrttechnik eingesetzt und, entsprechend den unterschiedlichen Aufgaben, für einen weiten Bereich von Schubklassen hergestellt. Dabei finden sowohl Triebwerke Verwendung, bei denen das Hydrazin nur über eine einzige, zentral im Einspritzkopf angeordnete Einspritzbohrung auf das in der Zersetzungskammer befindliche Katalysatorbett gelangt, als auch Triebwerke mit sogenannten Showerheads. Letzteres sind Triebwerke, bei denen das Hydrazin über eine Vielzahl von im Einspritzkopf angeordneten Bohrungen in die Zersetzungskammer gesprüht wird. Als Katalysatorbett dient in beiden Fällen häufig eine aus einzelnen Körnern bestehende Füllung eine katalytisch wirksamen Werkstoffs, beispielsweise mit Iridium dotierte bzw. beschichtete Aluminiumoxid-Keramik (Al₂O₃) .

Ein Problem, das bei derartigen Triebwerken insbesondere bei häufigen Kaltstarts und im Einzelpulsbetrieb, wie es beispielsweise bei Triebwerken für die Lageregelung von Raumflugkörpern üblich ist, auftreten kann, ist ein frühzeitiger Schubverlust bzw. Störungen infolge einer Beschädigung des Katalysatorbetts. Hervorgerufen werden diese Störungen durch die starke punktförmige Erosionsbeanspruchung des Katalysatorbetts beim Auftreffen des Hydrazinstrahls, der aus dem Einspritzkopf mit Geschwindigkeiten zwischen 2 und 20 m/s austritt. Diese Strahlbeaufschlagung kann zu einer Zerstörung einzelner Körner des Katalysatorbetts führen, woraus dann Unregelmäßigkeiten bei der katalytischen Zersetzung des Hydrazins resultieren.

Um diesen Erosionseffekt zu vermeiden bzw. zu mindern, ist in der US-3,871,828 das Katalysatorbett durch eine oder mehrere Lagen eines Drahtgewebes gegen eine direkte Beaufschlagung durch den Hydrazinstrahl abgeschirmt. Diese Siebe sollen zudem infolge ihrer Kapillarwirkung den Hydrazinstrahl vor dem Auftreffen auf das Katalysatorbett fein verteilen. Das Drahtgewebe besteht dabei häufig aus katalytisch nicht oder nur wenig aktivem Chromnickelstahl. Dem Vorteil, daß bei diesem Aufbau der Füllung eine optimale Auflösung und Verdampfung des einfallenden Hydrazinstrahls an dem durch die bei der Katalyse freiwerdende Zersetzungswärme aufgeheizten Drahtgewebe erzielt wird, stehen jedoch noch eine Reihe von Nachteilen gegenüber.

So weisen die bekannten Triebwerke zwischen dem Einspritzkopf und den das Katalysatorbett begrenzenden Sieben häufig ein relativ großes Volumen auf, das zum Teil aus dem Bemühen resultiert, ein durch die Rückwirkungen der in der Zersetzungskammer herrschenden hohen Temperaturen auf den Bereich des Einspritzrohres hervorgerufenes vorzeitiges Verdampfen des flüssigen Energieträgers bereits im Einspritzrohr zu verhindern. Dem gleichen Zweck dienen darüber hinaus auch wärmeleitende Kupferbänder, die häufig zusätzlich im Bereich der Siebe angeordnet sind. Insgesamt resultieren aus der hohen Temperaturdifferenz zwischen dem im Einspritzbereich der Zersetzungskammer mit etwa 50° C auftreffenden flüssigen Energieträger und der Austrittstemperatur der bei der Zersetzung entstehenden Gase aus der Kammer, die bei etwa 1.000° C liegt, bei den bekannten Triebwerken eine Reihe thermischer Probleme.

Aufgabe der Erfindung ist es, ein Triebwerk der eingangs genannten Art so auszubilden, daß es thermisch stabil ist, einen möglichst hohen Wirkungsgrad aufweist und zugleich kompakt aufgebaut ist.

Die Erfindung löst diese Aufgabe durch ein Triebwerk mit den kennzeichnenden Merkmalen des Patentanspruchs 1. Vorteilhafte Weiterbildungen des erfindungs-gemäßen Triebwerks, die eine weitere Optimierung seines Wirkungsgrades zum Ziel haben, sind in den weiteren Ansprüchen angegeben.

Das Triebwerk nach der Erfindung weist dabei eine Reihe von Vorteilen auf, die sich wie folgt zusammenfassen lassen:
- Da der Einspritzkopf mit einer Wärmebarriere versehen ist, verdampft das flüssige Hydrazin nicht bereits vor dem Einspritzen, und es entstehen keine unerklärlichen Druckspitzen.
- Das Totvolumen zwischen dem Einspritzkopf und dem Katalysatorbett ist extrem klein, dadurch ist die Nachzersetzung dieses Tröpfchenvolumens extrem kurz.
- Durch die Sieblagen diffundiert der flüssige Energieträger sehr schnell in das Katalysatorbett, während die Wärme vom Einspritzbereich ferngehalten wird.
- Infolge eines geringen Stützdurchmessers wölbt sich im Betrieb das glühende Sieb am Einspritzteil kaum nach außen aus, demzufolge bleibt das Katalysatorbett fest und der Katalysator hält wesentlich länger.
- Das Volumen des Katalysatorbetts paßt sich dem Zersetzungsgrad, beginnend mit der Flüssigkeit bei ca. 50^{o} C bis hin zum austretenden Gas bei ca. 1.000^{o} C, an. Tote Ecken und Strömungsdrosseln werden vermieden und das Triebwerk wird gasdynamisch optimiert.
- Das am austrittsseitigen Ende der Zersetzungskammer angeordnete kreisrunde und nach außen gewölbte Sieb garantiert eine optimale Austrittsfläche des heißen Gases. Durch seine Vorwölbung beult sich dieses Sieb auch bei Temperaturen von ca. 1.000°C im Gegensatz zu geraden Sieben kaum aus.

Nachfolgend soll die Erfindung anhand eines in der Zeichnung dargestellten Ausführungsbeispiels näher erläutert werden. Es zeigen:
- Fig. 1: einen Längsschnitt durch ein Hydrazintriebwerk und
- Fig. 2: eine vergrößerte Darstellung des in der Zeichnung gemäß Fig. 1 rechten Teilbereiches der Anordnung.

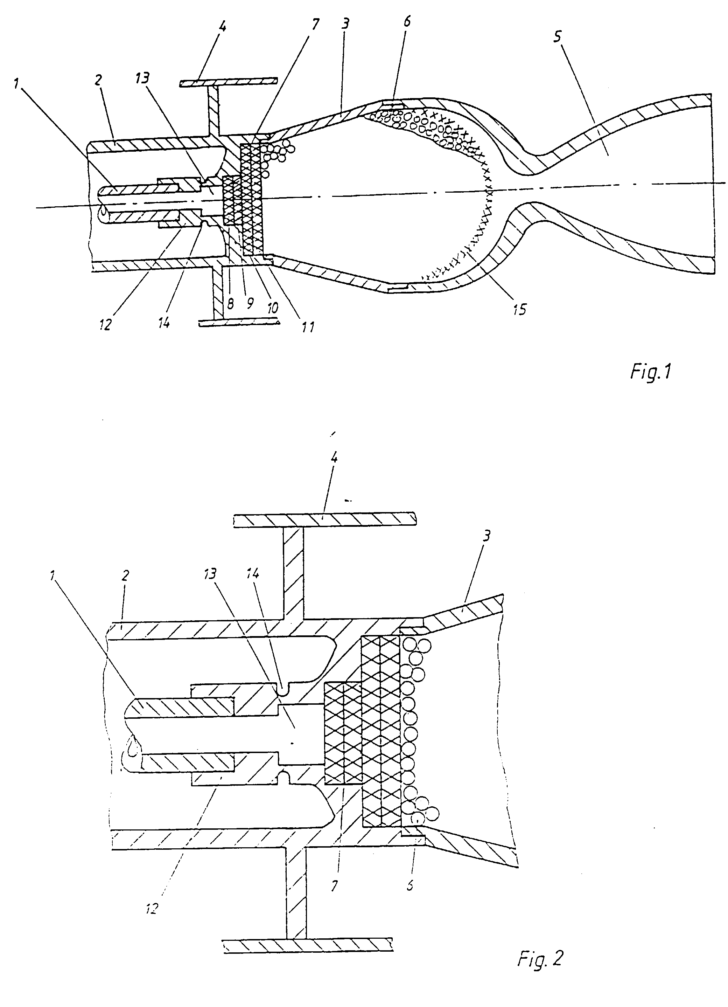

Bei dem in Fig. 1 dargestellten Hydrazintriebwerk führt ein Einspritzrohr 1, das von einem Hitzeschild 2 umgeben ist, von einem hier nicht eingezeichneten Vorratsbehälter für Hydrazin zu einer Zersetzungskammer 3, die ebenfalls von einer Abschirmung 4 umgeben ist. Der Zersetzungskammer 3 ist eine Austrittsdüse 5 für die in der Zersetzungskammer 3 erzeugten Heißgase nachgeschaltet. Im Inneren der Zersetzungskammer 3 befindet sich ein Katalysatorbett 6, das im Fall des hier beschriebenen Ausführungsbeispiels aus mit Iridium beschichteten Körnern einer Aluminiumoxid-Keramik (Al₂O₃) besteht. Die Korngröße beträgt etwa 20 bis 30 mesh, was einem mittleren Teilchendurchmesser von 0,6 bis 0,9 mm entspricht.

Wie in der Detaildarstellung in Fig. 2 erkennbar ist, wird die Zersetzungskammer 3 zum Einspritzrohr 1 hin durch eine Abschirmung 7 verschlossen, die bei dem hier gezeigten Ausführungsbeispiel aus vier Lagen 8 bis 11 eines Drahtgewebes besteht. Die kreisrund ausgebildeten Siebe 8 bis 11 sind in ihrem jeweiligen Randbereich an dem stirnseitigen Abschluß des Hitzeschildes 2 befestigt, der zugleich als Halterung 12 für das Einspritzrohr 1 ausgebildet ist. Um ein möglichst geringes Totvolumen 13 zwischen der Austrittsöffnung des Einspritzrohres 1 und der Zersetzungskammer 3 zu schaffen, sind die Siebe 8 bis 11 dabei in nur geringem Abstand zum Einspritzrohr angeordnet. Durch diese Maßnahme werden nicht nur die im Totvolumen 13 möglicherweise entstehenden Tröpfchenverluste auf ein Minimum beschränkt, sondern es ist dadurch zugleich auch möglich, den Durchmesser dieser Siebe 8 bis 11 zu minimieren. Infolge des sich daraus ergebenden geringen Stützdurchmessers haben diese Siebe praktisch keine Möglichkeit, sich im Betrieb unter dem Einfluß der heißen Zersetzungsgase nach außen aufzuwölben, so daß eine Lockerung des Katalysatorbettes verhindert wird. Die Siebe 8 bis 11 sind dabei mit der Halterung 12 des Einspritzrohres 1 punktverschweißt.

Um den Wärmeübergang zwischen der Zersetzungskammer 3 einerseits und dem Einspritzrohr 1 andererseits zu beschränken und ein mögliches Verdampfen des flüssigen Energieträgers bereits im Einspritzrohr 1 wirksam zu verhindern, ist an der Halterung 12 für das Einspritzrohr 1 eine Wärmebarriere in Form einer umlaufenden Nut 14 angebracht, durch die der für die Wärmeleitung wirksame Querschnitt nachhaltig verringert wird.

Die Zersetzungskammer 3 ist in Richtung auf die Austrittsdüse 5 sich konisch erweiternd ausgebildet. Damit ist in jedem Teilbereich der Zersetzungskammer 3 das für die katalytische Reaktion zur Verfügung stehende Volumen des Katalysatorbettes 6dem Dissoziationsgrads des flüssigen Energieträgers optimal angepaßt, und es werden tote Ecken und Strömungsdrosseln vermieden. Den austrittsseitigen Abschluß der Zersetzungskammer 3 bildet ein sphärisch nach außen gewölbtes weiteres Sieb 15, das ebenfalls aus einem Drahtgewebe besteht. Dieses Sieb 15 fixiert das Katalysatorbett 6 in seiner optimalen Packungsform innerhalb der Zersetzungskammer 3. Zugleich stellt es eine optimale Austrittsfläche für die in der Zersetzungskammer 3 durch die katalytische und/oder thermische Zersetzung des eingespritzten Hydrazins entstandenen heißen Gase, im wesentlich Stickstoff- (N₂) und Wasserstoff-(H₂)gas, dar.

## Patentansprüche

1. Triebwerk auf der Basis der katalytischen und/oder thermischen Zersetzung eines flüssigen Energieträgers, insbesondere Hydrazin, bei dem der flüssige Energieträger aus einem Vorratsbehälter über wenigstens ein Einspritzrohr (1) in eine mit einem Katalysatorbett (6) gefüllte Zersetzungskammer (3) gefördert wird, das Katalysatorbett (6) zum Einspritzrohr (1) hin durch wenigstens eine Lage eines Drahtgewebes (8-11) abgeschirmt ist und bei dem Mittel zur Verminderung der Wärmeübertragung zwischen der Zersetzungskammer (3) und dem Einspritzrohr (1) vorgesehen sind, dadurch gekennzeichnet, daß sich die Zersetzungskammer (3) in Richtung auf die Austrittsdüse (5) für die erzeugten Gase hin konisch erweitert und daß die Halterung des Einspritzrohres (1) wenigstens einen Bereich (14) verminderten Querschnitts aufweist.

2. Triebwerk nach Anspruch 1, dadurch gekennzeichnet, daß das Katalysatorbett (6) in dem der Austrittsdüse (5) benachbarten Endbereich der Zersetzungskammer (3) durch ein zur Austrittsdüse (5) hin sphärisch gewölbtes Austrittssieb (15) begrenzt wird.

3. Triebwerk nach einem der Ansprüche 1 oder 2, dadurch gekennzeichnet, daß die Halterung (12) des Einspritzrohres (1) wenigstens eine umlaufende Nut (14) aufweist.

4. Triebwerk nach einem der Ansprüche 1 bis 3, dadurch gekennzeichnet, daß zwischen dem Einspritzrohr (1) und dem Katalysatorbett (6) wenigstens drei Lagen (8-11) eines Drahtgeflechtes angebracht sind.

## Claims

1. Rocket based on catalytic and/or thermal decomposition of a liquid energy carrier, in particular hydrazine, wherein the liquid energy carrier is conveyed from a storage container via at least one injection tube (1) into a decomposition chamber (3) filled with a catalyst bed (6), the catalyst bed (6) is shielded in the direction of the injection tube (1) by at least one layer of a wire mesh (8-11) and wherein means are provided for reducing the transfer of heat between the decomposition chamber (3) and the injection tube (1), characterised in that the decomposition chamber (3) widens conically in the direction of the discharge nozzle (5) for the gases generated and in that the holder of the injection tube (1) has at least one region (14) of diminished cross-section.

2. Rocket according to Claim 1, characterised in that the catalyst bed (6) in the end region of the decomposition chamber (3) adjoining the discharge nozzle (5) is bordered by a discharge screen (15) which is spherically convex in the direction of the discharge nozzle (5).

3. Rocket according to one of Claims 1 or 2, characterised in that the holder (12) of the injection tube (1) has at least one peripheral groove (14).

4. Rocket according to one of Claims 1 to 3, characterised in that at least three layers (8-11) of a wire netting are disposed between the injection tube (1) and the catalyst bed (6).

## Revendications

1. Groupe motopropulseur basé sur la décomposition catalytique et/ou thermique d'un porteur d'énergie liquide, plus particulièrement de l'hydrazine, dans lequel le porteur d'énergie liquide est transporté à partir d'un réservoir par l'intermédiaire d'au moins une canalisation d'injection (1) dans une chambre de décomposition (3) remplie par un lit du catalyseur (6), le lit du catalyseur (6) en direction de la canalisation d'injection (1) étant protégé par au moins une couche de treillis (8-11) et dans lequel sont prévus des moyens destinés à réduire le transfert de chaleur entre la chambre de décomposition (3) et la canalisation d'injection (1), **caractérisé en ce que** la chambre de décomposition (3) s'élargit de manière conique en direction de la tuyère de sortie (5) pour les gaz produits et en ce que le raccord de la canalisation d'injection (1) présente au moins une zone (14) à la section transversale réduite.

2. Groupe motopropulseur selon la revendication 1, caractérisé en ce que le lit du catalyseur (6) est limité dans la zone d'extrémité de la chambre de décomposition (3) voisine de la tuyère de sortie (5) par un tamis de sortie (15) arqué de façon sphérique en direction de la tuyère de sortie (5).

3. Groupe motopropulseur selon l'une ou l'autre des revendications 1 et 2, caractérisé en ce que le raccord (12) de la canalisation d'injection (1) présente au moins une rainure (14) périphérique.

4. Groupe motopropulseur selon l'une ou l'autre des revendications 1 à 3, caractérisé en ce que entre la canalisation d'injection (1) et le lit du catalyseur (6) sont disposées au moins trois couches (8-11) de treillis.
